# EUROPEAN PATENT APPLICATION

(11) **EP 3 477 901 A1**
(43) Date of publication of application: **01.05.2019**
(21) Application number: 16906099.3
(22) Date of filing: 21.10.2016
(51) Int. Cl.: H04L 29/06, G06Q 20/32

(54) **MOBILE TERMINAL AND NFC PAYMENT CONTROL METHOD**

(30) Priority: 24.06.2016 CN 201610474531
(71) Applicant: ZTE Corporation, Shenzhen, Guangdong 518057 (CN)
(72) Inventor: SUN, Yinchuan, Shenzhen Guangdong 518057 (CN); LIU, Bin, Shenzhen Guangdong 518057 (CN); ZHOU, Shixia, Shenzhen Guangdong 518057 (CN); YU, Bing, Shenzhen Guangdong 518057 (CN); GAO, Jing, Shenzhen Guangdong 518057 (CN)
(74) Representative: Perronace, Andrea
(86) International application number: PCT/CN2016/102883
(87) International publication number: WO 2017/219559

(57) **Abstract**

A mobile terminal is provided. The mobile terminal includes a main control module, an auxiliary control module, a switch control module, and a Near Field Communication (NFC) controller. The switch control module is respectively connected to the main control module, the auxiliary control module and the NFC controller. The main control module generates a first control signal and receives a second control signal output by the auxiliary control module, and performs a NAND operation on the first control signal and the second control signal to obtain a third control signal, and transmits the third control signal to the switch module, and controls the NFC controller through the switch control module. Also a method for controlling an NFC payment in a mobile terminal is provided. The present invention improves the safety of NFC payment.

## Description

### Technical Field

The present invention relates to the technical field of mobile terminal devices, and more particularly to a mobile terminal and a method for controlling a NFC payment.

### Background

Mobile payment is a way for users to pay for goods or services having consumed through mobile terminals such as mobile phones. A mobile payment technology integrates mobile terminal devices, the Internet, application providers and financial institutions to provide users with financial services such as money payment and payment. Compared with traditional payment modes, mobile payment has the characteristics of "anytime, anywhere, carry around", long industrial chain, large industry span, wide social influence, and the like. Near Field Communication (NFC) is one of the fastest-growing mobile payment technologies. An NFC technology is evolved from the integration of non-contact Radio Frequency Identification (RFID) and interoperability technologies, combines an inductive reader, an inductive card and a point-to-point function on a single chip, and is able to perform identification and data exchange with compatible devices over a short distance.

At present, with the rapid development of mobile payment services, payment security issues have become one of the most basic and important issues of concern to the whole industry. The NFC preset in a mobile terminal is a near field payment way, which supports a card simulation working mode. A user pays using an NFC payment function of the mobile terminal conveniently. An NFC controller of a general mobile terminal is in an on state. It is very possible for credit card fraud. In particular, in the case of a micro-payment, such as an NFC payment that does not require a password and a payment password, if a card swiping device is carried for scanning near a mobile terminal having an NFC payment function, it is very possible for credit card fraud before a user knows, so it is very unsafe.

### Summary

A main purpose of an embodiment of the present invention is to provide a mobile terminal and a control method, intended to improve the safety of NFC payment.

To achieve the above purpose, the embodiment of the present invention provides a mobile terminal. The mobile terminal includes a main control module, an auxiliary control module, a switch control module, and an NFC controller. The switch control module is respectively connected to the main control module, the auxiliary control module and the NFC controller.

The main control module is configured to generate a first control signal and receive a second control signal output by the auxiliary control module, and Perform a NAND operation on the first control signal and the second control signal to obtain a third control signal, and then transmit the third control signal to the switch module, and control the NFC controller through the switch control module.

In an embodiment, the switch control module includes a first switch, and the first switch is configured to control on and off of an NFC antenna coil in the NFC controller.

In an embodiment, the first switch is an antenna switch.

In an embodiment, the main control module includes a Central Processing Unit (CPU), a first diode, an inverter, and a NAND gate unit; the auxiliary control module includes a second diode, a second switch, a first resistor, a second resistor, and a battery; the switch control module includes a first switch; and the NFC controller includes an NFC radio frequency transmitting module and an NFC antenna coil.

A first output end of the CPU is connected to an anode of the first diode, a cathode of the first diode is connected to a first input end of the NAND gate unit, and a second output end of the CPU is connected to a second input end of the NAND gate unit through the inverter.

The first input end of the NAND gate unit is connected to a cathode of the second diode, the cathode of the second diode is further connected to one end of the second switch, the other end of the second switch is connected to an anode of the second diode through the second resistor, the other end of the second switch is also connected to a negative pole of the battery, and the anode of the second diode is connected to a positive pole of the battery through the first resistor.

An output end of the NAND gate unit is connected to a first pin of the first switch, and a second pin and a third pin of the first switch are connected in series with the NFC radio frequency transmitting module and the NFC antenna coil.

In an embodiment, the main control module includes a CPU, a first diode, an inverter, and a NAND gate unit; the auxiliary control module includes a second diode, a second switch, a first resistor, a second resistor, and a battery; the switch control module includes a first switch; and the NFC controller includes an NFC radio frequency transmitting module and an NFC antenna coil.

A first output end of the CPU is connected to an anode of the first diode, a cathode of the first diode is connected to a first input end of the NAND gate unit, and a second output end of the CPU is connected to a second input end of the NAND gate unit through the inverter.

The first input end of the NAND gate unit is connected to a cathode of the second diode, the cathode of the second diode is further connected to one end of the second switch, the other end of the second switch is connected to an anode of the second diode through the second resistor, the other end of the second switch is also connected to a negative pole of the battery, and the anode of the second diode is connected to a positive pole of the battery through the first resistor.

An output end of the NAND gate unit is connected to a first pin of the first switch, the first switch is connected in series with the NFC antenna coil, and the NFC radio frequency transmitting module and the NFC antenna coil are connected in parallel with the first switch to form a closed loop.

In an embodiment, the mobile terminal is a mobile phone.

In an embodiment, the second switch is a physical button, when the mobile terminal is a mobile phone, the physical button is a volume adjustment button preset in the mobile phone, or the physical button is an independent button, and the physical button is configured to receive a trigger instruction of the physical button to control on and off of the NFC antenna coil in the NFC controller when the NFC controller is in a card simulation working mode.

In addition, to achieve the above purpose, the embodiment of the present invention further provides a method for controlling an NFC payment in a mobile terminal. The mobile terminal includes a main control module, an auxiliary control module and an NFC controller.

The NFC payment control method of a mobile terminal includes:a working state of the mobile terminal is acquired, and a working mode of an NFC controller is determined in the working state; the on or off of a first switch in a switch control module is controlled according to the working mode of the NFC controller; the on of an NFC antenna coil in the NFC controller is controlled according to the on of the first switch, or the off of the NFC antenna coil in the NFC controller is controlled according to the off of the first switch.

In an embodiment, the working mode of the NFC controller includes a card reader mode, a point-to-point mode, and a card simulation mode; and the step that the on or off of a first switch in a switch control module is controlled according to the working mode of the NFC controller includes the operations as follows.

When the mobile terminal is in a power-on state, if the NFC controller is in a card reader mode or a point-to-point mode, the first switch in the switch control module is controlled to be in an off state, and when a specified payment application payment starting instruction is received, the first switch is controlled to be in an on state.

If the NFC controller is in a card simulation working mode, the first switch in the switch control module is controlled to be in an off state, and when a trigger instruction of a second switch in an auxiliary control module is received, the first switch is controlled to be in an on state.

In an embodiment, the working mode of the NFC controller includes a card simulation mode; and the step that the on or off of a first switch in a switch control module is controlled according to the working mode of the NFC controller includes the operations as follows.

When the mobile terminal is in a power-off state, if the NFC controller is in a card simulation working mode, the first switch in the switch control module is controlled to be in an off state, and when a trigger instruction of a second switch in an auxiliary control module is received, the first switch is controlled to be in an on state.

In the embodiment of the present invention, a computer storage medium is further provided. The computer storage medium may store an execution instruction for performing the implementation of the NFC payment control method in the above embodiment.

The mobile terminal in the embodiment of the present invention includes a main control module, an auxiliary control module, a switch control module, and an NFC controller. The switch control module is respectively connected to the main control module, the auxiliary control module and the NFC controller. The main control module performs a NAND operation on the first control signal generated by itself and the second control signal output by the auxiliary control module to obtain a third control signal, and transmits the third control signal to the switch module, and controls the NFC controller through the switch control module. The NFC controller can implement an NFC payment function when payment is required; the NFC controller cannot implement the NFC payment function when payment is not required. Therefore, through the combination of the main control module and the auxiliary control module, a user may determine the auxiliary control module to output a control signal, thereby determining whether the NFC controller can complete the payment operation, and improving the safety of NFC payment.

### Brief Description of the Drawings

In order to describe the technical solutions in the embodiments of the present invention more clearly, the drawings required to be used in descriptions about the embodiments or the conventional art will be simply introduced below. It is apparent that the drawings in the following descriptions are only some embodiments of the present invention. Those of ordinary skilled in the art may further obtain other drawings according to the structure shown by these drawings without creative work.
Fig. 1 is a module schematic diagram of a mobile terminal according to an embodiment of the present invention;
Fig. 2 is a circuit structure schematic diagram of a mobile terminal according to an embodiment of the present invention; and
Fig. 3 is a functional module schematic diagram of a method for controlling an NFC payment according to a first embodiment of the present invention.

The implementation of the purpose, functional features and advantages of the present invention will be further described with reference to the embodiments and the accompanying drawings.

### Detailed Description of the Embodiments

It will be appreciated that specific embodiments described here are only used to explain the present invention, not to limit the present invention.

The technical solutions in the present invention will be clearly and completely described hereinbelow with the drawings in the embodiments of the present invention. It is apparent that the described embodiments are only part of the embodiments of the present invention, not all of the embodiments. On the basis of the embodiments of the present invention, all other embodiments obtained on the premise of no creative work of those of ordinary skill in the art fall within the scope of protection of the present invention.

It is to be noted that the descriptions of the "first", "second" and the like in the present invention are for the purpose of description only, and are not to be construed as indicating or implying their relative importance or implicitly indicating the number of technical features indicated. Thus, features defining "first" or "second" may include at least one of the features, either explicitly or implicitly. In addition, the technical solutions between the various embodiments may be combined with each other, but must be based on the realization of those of ordinary skill in the art, and when the combination of the technical solutions is contradictory or impossible to implement, it should be considered that the combination of the technical solutions does not exist and it is also not within the scope of protection required by the present invention.

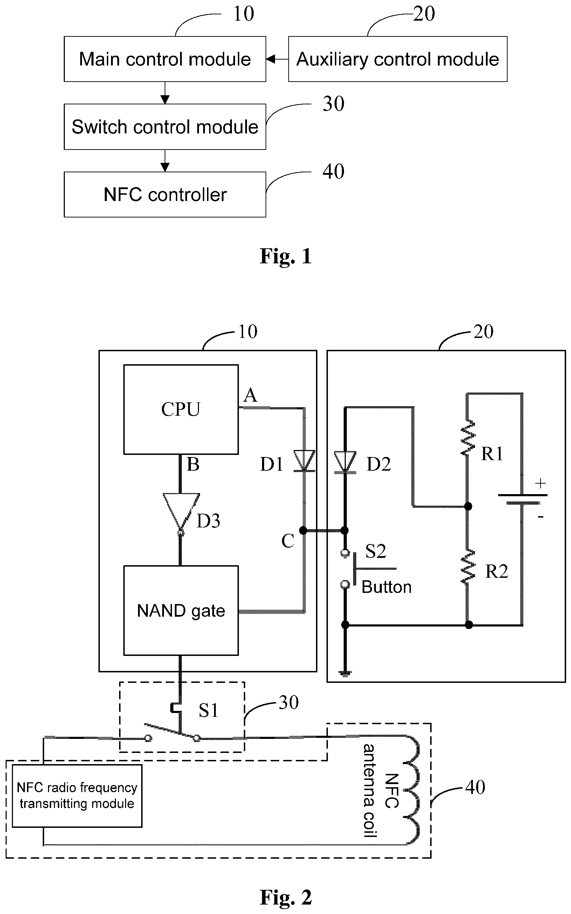

As shown in Fig. 1, a structure schematic diagram of a mobile terminal according to the present invention is shown. The mobile terminal in the present embodiment includes a main control module 10, an auxiliary control module 20, a switch control module 30, and an NFC controller 40. The switch control module 30 is respectively connected to the main control module 10, the auxiliary control module 20 and the NFC controller 40. The main control module 10 generates a first control signal. The auxiliary control module 20 outputs a second control signal to the main control module 10. The main control module 10 performs a NAND operation on the first control signal and the second control signal to obtain a third control signal. The main control module 10 transmits the third control signal to the switch module 30. The NFC controller 40 is controlled by the switch control module 30. The NFC controller 40 should work when it is required and should not work when it is not required, thereby avoiding credit card fraud.

In an embodiment, the working mode of the NFC controller 40 includes a card reader mode, a point-to-point mode, and a card simulation mode, wherein the NFC controller 40 may cause the phenomenon of credit card fraud in the card simulation mode. In the card reader mode and the point-to-point mode, the main control module 10 performs a NAND operation on the first control signal generated by itself and the second control signal output by the auxiliary control module 20 to obtain a third control signal, and transmits the third control signal to the switch control module 30, so that the switch control module 30 is enabled to control the preset switch to be in an on state, thereby normally working in the two modes. In the card simulation mode, the main control module 10 performs a NAND operation on the first control signal generated by itself and the second control signal output by the auxiliary control module 20 to obtain a third control signal, and transmits the third control signal to the switch control module 30, so that the switch control module 30 controls the switch to be in tan off state by default. Thus, the entire NFC antenna coil path of the NFC controller 40 is disconnected and cannot work normally, and the NFC controller 40 cannot implement the card simulation function, thereby effectively preventing the phenomenon of credit card fraud.

When a user needs to perform a card swiping transaction, the auxiliary control module 20 can be used to trigger the switch control module 30 to work to drive the switch to be turned on. For example, one or more combined physical buttons preset in the auxiliary control module 20 may be pressed to trigger the switch control module 30 to work to drive the switch to be turned on, so that the NFC antenna coil is in an on state, the card simulation mode of the NFC controller 40 works normally, and the card swiping operation can be completed. When the physical button is released after the card swiping operation is completed, the switch control module 30 drives the switch to be turned off, so that the NFC antenna coil is restored to the default state, and the NFC controller 40 cannot implement the card simulation function. When the user needs to swipe a card, the NFC antenna coil is manually controlled by the physical button preset in the auxiliary control module 20 to complete the card swiping operation. After the card is swiped, unless the user manually triggers the card swiping function again, the card cannot be swiped again, thus effectively avoiding the situation of credit card fraud. Not only credit card fraud is prevented for the card simulation mode, but also the normal working of the card reader mode, the point-to-point mode and the like are not affected.

The mobile terminal in the embodiment of the present invention includes a main control module 10, an auxiliary control module 20, a switch control module 30, and an NFC controller 40. The switch control module 30 is respectively connected to the main control module 10, the auxiliary control module 20 and the NFC controller 40. The main control module 10 performs a NAND operation on a first control signal generated by itself and a second control signal output by the auxiliary control module 20 to obtain a third control signal, and transmits the third control signal to the switch module 30, and the NFC controller 40 is controlled by the switch control module 30. The NFC controller 40 can implement an NFC payment function when payment is required; the NFC controller 40 cannot implement the NFC payment function when payment is not required. Therefore, through the combination of the main control module 10 and the auxiliary control module 20, a user may determine the auxiliary control module 20 to output a control signal, thereby determining whether the NFC controller 40 can complete the payment operation, and improving the safety of NFC payment.

Further, as shown in Fig. 2, a circuit structure schematic diagram of a mobile terminal according to the present invention is provided. In an embodiment, the main control module 10 includes a CPU, a first diode D1, an inverter D3, and a NAND gate unit; the auxiliary control module 20 includes a second diode D2, a second switch S2, a first resistor R1, a second resistor R2, and a battery; the switch control module 30 includes a first switch S1; and the NFC controller 40 includes an NFC radio frequency transmitting module and an NFC antenna coil.

A first output end A of the CPU is connected to an anode of the first diode D1, a cathode of the first diode D1 is connected to a first input end of the NAND gate unit, and a second output end B of the CPU is connected to a second input end of the NAND gate unit through the inverter D3.

The first input end of the NAND gate unit is connected to a cathode of the second diode D2, the cathode of the second diode D2 is further connected to one end of the second switch S2, the other end of the second switch S2 is connected to an anode of the second diode D2 through the second resistor R2, the other end of the second switch S2 is also connected to a negative pole of the battery, and the anode of the second diode D2 is connected to a positive pole of the battery through the first resistor R2. An output end of the NAND gate unit is connected to a first pin of the first switch S1, and a second pin and a third pin of the first switch S1 are connected in series with the NFC radio frequency transmitting module and the NFC antenna coil.

It is to be noted that the first switch S1 in the switch control module 30 is used to control the on and off of the NFC antenna coil in the NFC controller 40. The first switch is an S1 antenna switch, and the antenna switch may be an IC chip, so that an integrated antenna switch IC is used for control, and the first switch S1 can be controlled to be turned on and off by high and low levels. Of course, the antenna switch may also be a discrete device.

The function of the first diode D1 and the second diode D2 is to prevent reflow caused by the difference between voltage output by the first output end A of the CPU and voltages of the first resistor R1 and the second resistor R2, and the function of the inverter D3 is to invert voltage output by the second output end B of the CPU.

In the present embodiment, the type of the mobile terminal may be set according to actual needs. Optionally, the mobile terminal is a mobile phone. The second switch S2 is a physical button, and the physical button is a volume adjustment button preset in the mobile phone, which may be a volume plus button or a volume minus button. Or, the physical button is an independent button, and the physical button is configured to receive a trigger instruction of the physical button to control on and off of the NFC antenna coil in the NFC controller 40 when the NFC controller 40 is in a card simulation working mode.

The working principle of the whole circuit will be described in detail below. When the mobile terminal is in the power-on state, the first output end A of the CPU outputs a high level. If the NFC controller is in the card reader mode or the point-to-point mode, the second output end B of the CPU outputs a low level by default. The low level signal is inverted into a high level by the inverter D3, after a high level output by the first output end A of the CPU and a high level output by the inverter D3 enter the NAND gate unit, a NOT gate unit performs a NAND operation and then outputs a low level, and the first switch S1 is controlled to be in an off state, so that the NFC antenna coil and the NFC radio frequency transmitting module do not form a loop, and the NFC antenna coil in the NFC controller 40 does not work.

It is to be noted that the mobile terminal may preset a white list to which one or more payment applications are added. Since the second output end B of the CPU outputs a low level by default, it may be set that the second output end B of the CPU is triggered to output a high level when the mobile terminal starts any payment application in the white list to perform NFC payment. For the payment applications in the white list, the user may add or delete the corresponding payment applications according to own needs.

In an embodiment, when the mobile terminal is in the power-on state, the first output end A of the CPU outputs a high level, and the NFC controller is in the card reader mode or the point-to-point mode. If the mobile terminal starts any payment application in the preset white list for NFC payment, the second output end B of the CPU outputs a high level, and the high level signal is inverted into a high-low level by the inverter D3, and a high level output by the first output end A of the CPU and a high level output by the inverter D3 enter the NAND gate unit for a NAND operation. Thus, regardless of whether the voltage at point C is a high level or a low level, the output of the NAND gate unit is a high level, and the first switch S1 may be controlled to be in an on state, so that the NFC antenna coil and the NFC radio frequency transmitting module form a loop, and the NFC antenna coil in the NFC controller 40 works normally to implement a card reader or point-to-point function.

When the mobile terminal is in the power-on state, the first output end A of the CPU outputs a high level. If the NFC controller is in the card simulation mode and does not start any payment application in the white list, the second output end B of the CPU outputs a low level by default. The low level is inverted into a high level by the inverter D3, so that a low level output by the second output end B of the CPU does not affect an output result of the NAND gate unit. At this time, the output result of the NAND gate unit is completely dependent on the working state of the second switch S2. When the second switch S2 is pressed to be in an on state, point C is at a low level, so after the low level at point C and the high level output by the inverter D3 enter the NAND gate unit for a NAND operation, the output of the NOT gate unit is a high level, and the first switch S1 is controlled to be turned on, thereby completing the closing of the NFC antenna coil and the NFC radio frequency transmitting module to make the NFC antenna coil in the NFC controller 40 work normally to implement a payment function. Therefore, only the user actively presses the second switch S2, the NFC antenna coil in the NFC controller 40 can work, otherwise it will not work, thereby avoiding the situation of credit card fraud.

When the mobile terminal is in a power-off state, the second output end B of the CPU outputs a low level, the low level is inverted into a high level by the inverter D3, and the high level output by the inverter D3 does not affect an output result of the NAND gate unit. In the power-off state, the first output end A of the CPU outputs a low level. Due to the presence of the first diode D1, the signal state of point C is not affected, and the signal of point C is defaulted to a high level. At this time, the high level at point C and the high level output by the inverter D3 enter the NAND gate unit, and the output of the NAND gate unit is a low level to control the first switch S1 to be turned off, so that the NFC antenna coil and the NFC radio frequency transmitting module do not form a loop, and the NFC antenna coil in the NFC controller 40 does not work.

When NFC payment is required, the second switch S2 is pressed to be in an on state, point C is at a low level, so after the low level at point C and the high level output by the inverter D3 enter the NAND gate unit for a NAND operation, the output of the NOT gate unit is a high level, and the first switch S1 is controlled to be turned on, thereby completing the closing of the NFC antenna coil and the NFC radio frequency transmitting module to make the NFC antenna coil in the NFC controller 40 work normally to implement a card swiping function by the NFC controller 40. After the payment is completed, the button S2 is released to be in an off state, the level of point C becomes a high level, after the high level at point C and the high level output by the inverter D3 enter the NAND gate unit for a NAND operation, the output of the NOT gate unit is a low level, the first switch S1 is controlled to be turned off, and the NFC controller 40 cannot work. When the mobile terminal is in the power-off state, only the user actively presses the second switch S2, the NFC antenna coil in the NFC controller 40 can work, otherwise it will not work, thereby avoiding the situation of credit card fraud.

In the present embodiment, the first switch S1 is connected in series to the path of the NFC radio frequency transmitting module and the NFC antenna coil of the entire NFC controller 40. If the first switch S1 is not turned on, the NFC antenna coil does not form a closed loop and does not output power, and the NFC antenna coil in the NFC controller 40 does not work. Only after the first switch S1 is turned on, the NFC antenna coil forms a closed loop, and the power can be effectively output. At this time, the NFC antenna coil in the NFC controller 40 works normally. Moreover, by means of the series connection mode, when the first switch S1 is turned on, the radio frequency output of the NFC controller 40 is not directly short-circuited, and even if the NFC radio frequency transmitting module of the NFC controller 40 has an erroneous operation, it is impossible to burn the NFC controller 40. For example, if power is transmitted by an external card reader and received by the NFC antenna coil, since the first switch S1 does not directly short-circuit the NFC antenna coil, the power absorbed by the NFC antenna coil is not directly consumed by the first switch S1, and it is possible to burn the NFC antenna coil. It not only improves the safety of NFC payment, but also improves the reliability of a hardware circuit in the mobile terminal.

Further, in another embodiment, the main control module 10 includes a CPU, a first diode D1, an inverter D3, and a NAND gate unit; the auxiliary control module 20 includes a second diode D2, a second switch S2, a first resistor R1, a second resistor R2, and a battery; the switch control module 30 includes a first switch S1; and the NFC controller 40 includes an NFC radio frequency transmitting module and an NFC antenna coil.

A first output end A of the CPU is connected to an anode of the first diode D1, a cathode of the first diode D1 is connected to a first input end of the NAND gate unit, and a second output end B of the CPU is connected to a second input end of the NAND gate unit through the inverter D3.

The first input end of the NAND gate unit is connected to a cathode of the second diode D2, the cathode of the second diode D2 is further connected to one end of the second switch S2, the other end of the second switch S2 is connected to an anode of the second diode D2 through the second resistor R2, the other end of the second switch S2 is also connected to a negative pole of the battery, and the anode of the second diode D2 is connected to a positive pole of the battery through the first resistor R2.

An output end of the NAND gate unit is connected to a first pin of the first switch S1, the first switch S1 is connected in series with the NFC antenna coil, and the NFC radio frequency transmitting module and the NFC antenna coil are connected in parallel with the first switch to form a closed loop.

In the present embodiment, the first switch S1 and the NFC antenna coil are designed in parallel, which is opposite to the control principle that the first switch S1 and the NFC antenna coil are designed in series. That is, after the first switch S1 is turned on, the NFC antenna coil in the NFC controller 40 cannot work, and when the first switch S1 is turned off, the NFC antenna coil in the NFC controller 40 can work normally. When the mobile terminal is in the power-on state, the normal working of the NFC controller in the card reader mode or the point-to-point mode is not affected, and when the mobile terminal is in the power on or off state, when a user needs to make NFC payment, the working state of the NFC controller is controlled by the state of the second switch S2, thereby avoiding credit card fraud, and improving the safety of the mobile terminal for NFC payment.

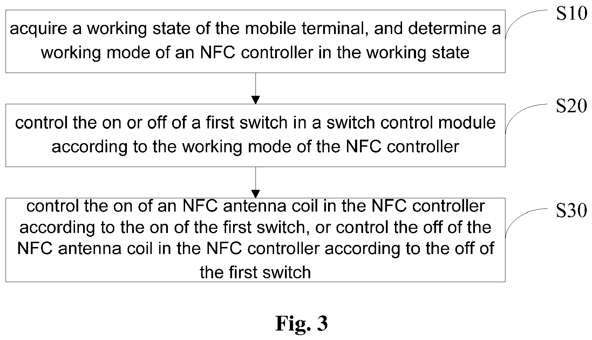

Correspondingly, as shown in Fig. 3, an NFC payment control method of a mobile terminal according to an embodiment of the present invention is provided. The NFC payment control method of a mobile terminal in this embodiment includes the steps as follows.

At step S10, a working state of the mobile terminal is acquired, and a working mode of an NFC controller is determined in the working state.

At step S20, the on or off of a first switch in a switch control module is controlled according to the working mode of the NFC controller.

At step S30, the on of an NFC antenna coil in the NFC controller is controlled according to the on of the first switch, or the off of the NFC antenna coil in the NFC controller is controlled according to the off of the first switch.

In the present embodiment, the type of the mobile terminal may be set according to actual needs. Optionally, the mobile terminal is a mobile phone. The mobile terminal includes a main control module, an auxiliary control module, a switch control module, and an NFC controller. The switch control module is respectively connected to the main control module, the auxiliary control module and the NFC controller. The main control module generates a first control signal and receives a second control signal output by the auxiliary control module. A NAND operation is performed on the first control signal and the second control signal to obtain a third control signal that is then transmitted to the switch module. The NFC controller is controlled by the switch control module.

In an embodiment, a current working state of the mobile terminal is first acquired, that is, it is determined whether the mobile terminal is in a power-off state or in a power-on state. Then, a working mode of the NFC controller in the current working state is further determined. The working mode of the NFC controller includes a card reader mode, a point-to-point mode, and a card simulation mode. In the working mode of the NFC controller, after receiving a third control signal output by the main control module, the switch module in the mobile terminal controls the on or off of the first switch in the switch control module according to the third control signal. When the first switch is turned on, the NFC antenna coil in the NFC controller is controlled to normally work, and when the first switch is turned off, the NFC antenna coil in the NFC controller is controlled to stop working. Or, when the first switch is turned on, the NFC antenna coil in the NFC controller is controlled to stop working, and when the first switch is turned off, the NFC antenna coil in the NFC controller is controlled to normally work.

Further, step S20 includes that: when the mobile terminal is in a power-on state, if the NFC controller is in a card reader mode or a point-to-point mode, the first switch in the switch control module is controlled to be in an off state, and when a specified payment application payment starting instruction is received, the first switch is controlled to be in an on state.

If the NFC controller is in a card simulation working mode, the first switch in the switch control module is controlled to be in an off state, and when a trigger instruction of a second switch in an auxiliary control module is received, the first switch is controlled to be in an on state.

When the mobile terminal is in a power-off state, if the NFC controller is in a card simulation working mode, the first switch in the switch control module is controlled to be in an off state, and when a trigger instruction of a second switch in an auxiliary control module is received, the first switch is controlled to be in an on state.

In an embodiment, the NFC controller may cause the phenomenon of credit card fraud in the card simulation mode. As shown in Fig. 2, when the mobile terminal is in the power-on state, if the NFC controller is in the card reader mode and the point-to-point mode, a first output end A of a CPU outputs a high level, and a second output end B of the CPU outputs a low level by default. The low level signal is inverted into a high level by an inverter D3, after a high level output by the first output end A of the CPU and a high level output by the inverter D3 enter the NAND gate unit, a NOT gate unit performs a NAND operation and then outputs a low level, and the switch control module controls the first switch S1 to be in an off state, so that the NFC antenna coil and the NFC radio frequency transmitting module do not form a loop, and the NFC antenna coil in the NFC controller 40 does not work.

When a specified payment application payment starting instruction is received, the second output end B of the CPU outputs a high level, the high level signal is inverted into a high-low level by the inverter D3, and a high level output by the first output end A of the CPU and a high level output by the inverter D3 enter a NAND gate unit for a NAND operation. Thus, regardless of whether the voltage at point C is a high level or a low level, the output of the NAND gate unit is a high level, and the switch control module can control the first switch S1 to be in an on state, so that the NFC antenna coil and the NFC radio frequency transmitting module form a loop, and the NFC antenna coil in the NFC controller 40 works normally to implement a card reader or point-to-point function. That is, the two modes can normally work.

The mobile terminal may preset a white list to which one or more payment applications are added. It may be set that the first switch is triggered to be turned on when the mobile terminal starts any payment application in the white list to perform NFC payment. The specified payment application may be a payment application in the white list. For the payment applications in the white list, a user may add or delete the corresponding payment applications according to own needs.

If the NFC controller is in the card simulation mode, the first output end A of the CPU outputs a high level, and the second output end B of the CPU outputs a low level by default. The low level is inverted into a high level by the inverter D3, so that a low level output by the second output end B of the CPU does not affect an output result of the NAND gate unit. The switch control module controls the switch to be in an off state by default, so that the entire NFC antenna coil path of the NFC controller is disconnected and cannot work normally, and the NFC controller cannot implement the card simulation function, thus effectively preventing the phenomenon of credit card fraud.

When a user needs to perform a card swiping transaction, the second switch in the auxiliary control module 20 can be used to trigger the switch control module 30 to work to drive the switch to be turned on. When a trigger instruction for the second switch in the auxiliary control module is received and the second switch S2 is pressed to be in an on state, point C is at a low level, so after the low level at point C and the high level output by the inverter D3 enter the NAND gate unit for a NAND operation, the output of a NOT gate unit is a high level, and the first switch S1 is controlled to be turned on, thereby completing the closing of the NFC antenna coil and the NFC radio frequency transmitting module to make the NFC antenna coil in the NFC controller 40 work normally to implement a payment function. For example, one or more combined physical buttons preset in the auxiliary control module may be pressed to trigger the switch control module to work to drive the switch to be turned on, so that the NFC antenna coil is in an on state, the card simulation mode of the NFC controller works normally, and the card swiping operation can be completed. When the physical button is released after the card swiping operation is completed, the switch control module drives the switch to be turned off, so that the NFC antenna coil is restored to the default state, and the NFC controller cannot implement the card simulation function. When the user needs to swipe a card, the NFC antenna coil is manually controlled by the physical button preset in the auxiliary control module to complete the card swiping operation. After the card is swiped, unless the user manually triggers the card swiping function again, the card cannot be swiped again, thus effectively avoiding the situation of credit card fraud. The mobile terminal may also set an option in a specified user interface to control the first switch to be in an on state, thereby controlling the NFC antenna coil in the NFC controller to normally work. Not only credit card fraud is prevented for the card simulation mode, but also the normal working of the card reader mode, the point-to-point mode and the like are not affected.

When the mobile terminal is in a power-off state, in the card simulation working mode, the first switch is defaulted to be in an off state, and the NFC antenna coil in the NFC controller is controlled to stop working according to the off state of the first switch. In an embodiment, the second output end B of the CPU outputs a low level, the low level is inverted into a high level by the inverter D3, and the high level output by the inverter D3 does not affect an output result of the NAND gate unit. In the power-off state, the first output end A of the CPU outputs a low level. Due to the presence of the first diode D1, the signal state of point C is not affected, and the signal of point C is defaulted to a high level. At this time, the high level at point C and the high level output by the inverter D3 enter the NAND gate unit, and the output of the NAND gate unit is a low level to control the first switch S1 to be turned off, so that the NFC antenna coil and the NFC radio frequency transmitting module do not form a loop, and the NFC antenna coil in the NFC controller 40 does not work.

When NFC payment is required, a trigger instruction for the second switch in the auxiliary control module is received, and the first switch is controlled to be in an on state to control the NFC antenna coil in the NFC controller to normally work. In an embodiment, the second switch S2 is pressed to be in an on state, point C is at a low level, so after the low level at point C and the high level output by the inverter D3 enter the NAND gate unit for a NAND operation, the output of the NOT gate unit is a high level, and the first switch S1 is controlled to be turned on, thereby completing the closing of the NFC antenna coil and the NFC radio frequency transmitting module to make the NFC antenna coil in the NFC controller 40 work normally to implement a card swiping function by the NFC controller 40. After the payment is completed, the button S2 is released to be in an off state, the level of point C becomes a high level, after the high level at point C and the high level output by the inverter D3 enter the NAND gate unit for a NAND operation, the output of the NOT gate unit is a low level, the first switch S1 is controlled to be turned off, and the NFC controller 40 cannot work. When the mobile terminal is in the power-off state, only the user actively presses the second switch S2, the NFC antenna coil in the NFC controller 40 can work, otherwise it will not work, thereby avoiding the situation of credit card fraud.

In an embodiment, the second switch is a physical button. When the mobile terminal is a mobile phone, the physical button is a volume adjustment button preset in the mobile phone, which may be a volume plus button or a volume minus button. Or, the physical button is an independent button, and the physical button is configured to receive a trigger instruction of the physical button to control the working state of the NFC antenna coil preset in the NFC controller when the NFC controller is in a card simulation working mode.

In the present embodiment, through the combination of the main control module and the auxiliary control module, a user may determine the auxiliary control module to output a control signal, thereby determining whether the NFC controller can complete the payment operation. Not only credit card fraud is prevented for the card simulation mode, but also the normal working of the card reader mode, the point-to-point mode and the like are not affected. The safety of NFC payment and the convenience of the NFC payment by the mobile terminal are improved.

The above is only a preferred embodiment of the present invention, and is not intended to limit the patent scope of the present invention, and the equivalent structure or equivalent process transformations made by the specification and the drawings of the present invention may be directly or indirectly applied to other related technical fields, and may be similarly included in the scope of patent protection of the present invention.

### Industrial applicability

The above technical solution provided according to the embodiment of the present invention may be applied to an NFC payment control process. A mobile terminal in the embodiment of the present invention includes a main control module, an auxiliary control module, a switch control module, and an NFC controller. The switch control module is respectively connected to the main control module, the auxiliary control module and the NFC controller. The main control module performs a NAND operation on a first control signal generated by itself and a second control signal output by the auxiliary control module to obtain a third control signal, and transmits the third control signal to the switch module, and controls the NFC controller through the switch control module. The NFC controller can implement an NFC payment function when payment is required; the NFC controller cannot implement the NFC payment function when payment is not required. Therefore, through the combination of the main control module and the auxiliary control module, a user may determine the auxiliary control module to output a control signal, thereby determining whether the NFC controller can complete the payment operation, and improving the safety of NFC payment.

## Claims

1. A mobile terminal, comprising a main control module, an auxiliary control module, a switch control module, and a Near Field Communication (NFC) controller, wherein the switch control module is respectively connected to the main control module, the auxiliary control module and the NFC controller;
the main control module is configured to generate a first control signal and receive a second control signal output by the auxiliary control module, and perform a NAND operation on the first control signal and the second control signal to obtain a third control signal, and transmit the third control signal to the switch module, and control the NFC controller through the switch control module.

2. The mobile terminal according to claim 1, wherein the switch control module comprises a first switch, and the first switch is configured to control on and off of an NFC antenna coil in the NFC controller.

3. The mobile terminal according to claim 2, wherein the first switch is an antenna switch.

4. The mobile terminal according to claim 1, wherein the main control module comprises a Central Processing Unit (CPU), a first diode, an inverter, and a NAND gate unit; the auxiliary control module comprises a second diode, a second switch, a first resistor, a second resistor, and a battery; the switch control module comprises a first switch; the NFC controller comprises an NFC radio frequency transmitting module and an NFC antenna coil;
a first output end of the CPU is connected to an anode of the first diode, a cathode of the first diode is connected to a first input end of the NAND gate unit, and a second output end of the CPU is connected to a second input end of the NAND gate unit through the inverter;
the first input end of the NAND gate unit is connected to a cathode of the second diode, the cathode of the second diode is further connected to one end of the second switch, the other end of the second switch is connected to an anode of the second diode through the second resistor, the other end of the second switch is also connected to a negative pole of the battery, and the anode of the second diode is connected to a positive pole of the battery through the first resistor; and
an output end of the NAND gate unit is connected to a first pin of the first switch, and a second pin and a third pin of the first switch are connected in series with the NFC radio frequency transmitting module and the NFC antenna coil.

5. The mobile terminal according to claim 1, wherein the main control module comprises a CPU, a first diode, an inverter, and a NAND gate unit; the auxiliary control module comprises a second diode, a second switch, a first resistor, a second resistor, and a battery; the switch control module comprises a first switch; the NFC controller comprises an NFC radio frequency transmitting module and an NFC antenna coil;
a first output end of the CPU is connected to an anode of the first diode, a cathode of the first diode is connected to a first input end of the NAND gate unit, and a second output end of the CPU is connected to a second input end of the NAND gate unit through the inverter;
the first input end of the NAND gate unit is connected to a cathode of the second diode, the cathode of the second diode is further connected to one end of the second switch, the other end of the second switch is connected to an anode of the second diode through the second resistor, the other end of the second switch is also connected to a negative pole of the battery, and the anode of the second diode is connected to a positive pole of the battery through the first resistor; and
an output end of the NAND gate unit is connected to a first pin of the first switch, the first switch is connected in series with the NFC antenna coil, and the NFC radio frequency transmitting module and the NFC antenna coil are connected in parallel with the first switch to form a closed loop.

6. The mobile terminal according to any one of claims 1 to 5, wherein the mobile terminal is a mobile phone.

7. The mobile terminal according to claim 4 or 5, wherein the second switch is a physical button, when the mobile terminal is a mobile phone, the physical button is a volume adjustment button preset in the mobile phone, or the physical button is an independent button, and the physical button is configured to receive a trigger instruction of the physical button to control on and off of the NFC antenna coil in the NFC controller when the NFC controller is in a card simulation working mode.

8. A method for controlling Near Field Communication (NFC) payment in a mobile terminal, comprising:
acquiring a working state of the mobile terminal, and determining a working mode of an NFC controller in the working state;
controlling the on or off of a first switch in a switch control module according to the working mode of the NFC controller; and
controlling the on of an NFC antenna coil in the NFC controller according to the on of the first switch, or controlling the off of the NFC antenna coil in the NFC controller according to the off of the first switch.

9. The method according to claim 8, wherein the working mode of the NFC controller comprises a card reader mode, a point-to-point mode, and a card simulation mode; and controlling the on or off of a first switch in a switch control module according to the working mode of the NFC controller comprises:
when the mobile terminal is in a power-on state, if the NFC controller is in a card reader mode or a point-to-point mode, controlling the first switch in the switch control module to be in an off state, and when a specified payment application payment starting instruction is received, controlling the first switch to be in an on state; and
if the NFC controller is in a card simulation working mode, controlling the first switch in the switch control module to be in an off state, and when a trigger instruction of a second switch in an auxiliary control module is received, controlling the first switch to be in an on state.

10. The method according to claim 8 or 9, wherein the working mode of the NFC controller comprises a card simulation mode; and controlling the on or off of a first switch in a switch control module according to the working mode of the NFC controller comprises:
when the mobile terminal is in a power-off state, if the NFC controller is in a card simulation working mode, controlling the first switch in the switch control module to be in an off state, and when a trigger instruction of a second switch in an auxiliary control module is received, controlling the first switch to be in an on state.
